# EUROPEAN PATENT SPECIFICATION

(11) **EP 4 610 122 B1**
(45) Date of publication and mention of the grant of the patent: **26.08.2026**
(21) Application number: 24160533.6
(22) Date of filing: 29.02.2024
(51) Int. Cl.: B60T 13/26, B60T 15/48, B60T 17/18

(54) **PNEUMATIC DEVICE FOR A PNEUMATIC SYSTEM OF A COMMERCIAL VEHICLE**
PNEUMATISCHE VORRICHTUNG FÜR EIN PNEUMATISCHES SYSTEM EINES NUTZFAHRZEUGS
DISPOSITIF PNEUMATIQUE POUR UN SYSTÈME PNEUMATIQUE D'UN VÉHICULE UTILITAIRE

(43) Date of publication of application: 03.09.2025
(73) Proprietor: ZF CV Systems Europe BV, 1170 Brüssel (BE)
(72) Inventor: SEMENIUK, Maciej, 58-506 Jelenia Gora (PL)
(74) Representative: Copi, Joachim

(56) References cited:
- BR-A- 9 401 647
- DE-A1- 102014 019 117
- DE-B3- 102004 005 982

## Description

The invention relates to a pneumatic device for a pneumatic system of a commercial vehicle, in particular a multi-circuit protection valve, and to a pneumatic system comprising the pneumatic device.

Pneumatic systems of commercial vehicles often comprise multi-body devices with two or more housings assembled together. A design with several bodies enables a higher variety with standardized smaller devices for specific functions. For example, an air processing unit in general comprises an air dryer and a multi-circuit protection valve MCPV, the MCPV being connected to the air dryer and providing pneumatic outlet ports for subsequent air consumer circuits, in particular a first and second service brake circuit, and specific further air consumer circuits. In some embodiments, the multi-circuit protection valve shall provide an outlet port for a parking brake circuit or combined parking brake and trailer control circuit; furthermore, additional consumers can be connected to a further outlet port, thereby providing in total two to four outlet ports, each with a specific fitting or socket for pneumatic pipes or pneumatic hoses, respectively. Such a multi-circuit protection valve can be designed as a specific body with a single housing, in which the inlet ports and outlet ports are provided. Such a single body solution ensures a compact design with high robustness; however, MCPVs for different applications must be completely redesigned, with new, specific housings for each application.

Multi-body solutions of MCPVs can comprise several housings or bodies for the various outlet ports, wherein the housings are sealingly connected to each other. However, the mechanical fixation between the housings may be impaired or damaged, for example by mechanical stress or vibrations, thereby resulting in a failure with a disconnection of the housings. In case of such a failure, the pneumatic connection between the housings is vented and compressed air is discharged, leading to a loss of compressed air and possibly to a pressure drop in the other consumer circuits, for example the service brake circuits, thereby resulting in dangerous situations. The publication DE 10 2014 019117 A1 discloses a multi-circuit protection valve comprising a valve block consisting of a plurality of layered block elements with distinctive purposes.

It is therefore an object of the invention to provide a pneumatic device, in particular a multi-circuit protection valve, for a pneumatic system of a commercial vehicle, wherein the pneumatic device allows for a flexible design and ensures a high safety, in particular against failures.

This object is realized by a pneumatic system according to claim 1. The subclaims describe preferred embodiments. The pneumatic device is preferably a multi-circuit protection valve. Further, a pneumatic system of a commercial vehicle comprising the pneumatic devices provided.

The inventive pneumatic system has several advantages and benefits. The pneumatic device comprises two or more bodies or housings, thereby providing a high variety of possible combinations and a modular system of housings, in particular standardized housings, which are assembled to each other according to the specific requirements. In particular, standardized mechanical and/or pneumatic interfaces between the housings allow a simple, modular system with a high variety and number of combinations.

The internal blocking valve of the first housing provides a high safety against possible failures by blocking an air leakage and thereby avoiding unnecessary pressure loss. The additional feature of the internal blocking valve does not lead to relevant higher costs, since the blocking valve can be realized by various relevant mechanical, displaceable elements, preferably without a solenoid or electric contacts.

According to a preferred embodiment, the blocking valve comprises a mechanical control which interacts with a mechanical part of the second housing, thereby avoiding solenoid elements or electrical contacts. The blocking valve is activated depending on the assembling status, e.g. whether the second housing is still attached to the first housing or whether it is detached. This provides a fail-safe design, as loss or detachment of the second housing or a damage of the connection between the housings result in an immediate change in the position of the blocking valve due to the direct mechanical contact.

In normal use in the connected state of the housings, the activated, open blocking valve does not affect the airflow through the outlet line to the outlet of the first housing, which is sealed to or sealingly connected to a pneumatic inlet of the second housing. In any case of loss and/or in the case of loss of the second housing, the blocking valve closes immediately, blocking the airflow through the outlet line.

The two housing preferably contact each other in a mechanical interface which comprises the mechanical control system, which is realized by the mechanical control of the valve and the mechanical part of the second housing, the pneumatic interface including the housing outlet of the first housing and the housing inlet of the second housing, and preferably a locking means for locking the two housings. The locking means preferably comprises one or more screws inserted in the first and/or second housing.

The blocking valve can be realized by a simple 2/2 check valve with mechanical control, which allows for various hardware embodiments of a displaceable valve part.

According to a preferred embodiment, the mechanical control part of the second housing protrudes into a recess of the first housing. This allows for a safe position of the control contact, which cannot be affected by the environment. Further, a disconnection of the second housing results immediately to a disengagement of the mechanical control parts.

The mechanical control of the blocking valve can comprise a linearly displaceable plunger or piston, or it can consist of a linearly displaceable plunger or piston without other mechanical parts, for example with a sealing means like an O-ring provided on the plunger or piston. This allows a simple, inexpensive and fail-safe design, as plungers and pistons are well known as such and often used in other valve systems. The displaceable plunger or piston can interact with a valve seat provided in the recess. This allows a simple and inexpensive design and manufacture, wherein a recess is formed or provided in the first housing, and the valve comprising the valve seat, plunger, and a spring means is introduced into the recess. Afterwards, the housings are assembled together, wherein the mechanical part of the second housing is introduced into the recess thereby contacting and actuating the plunger, which then automatically detaches from the valve seat.

According to a preferred embodiment, the pneumatic device is a multi-circuit protection valve (MCPV) having an inlet port for connection to an air dryer of an air processing unit, and outlet ports for connection to consumer air circuits,
wherein the consumer circuits are preferably at least two service brake circuits of the commercial vehicle and additional air consumer circuits, in particular a parking brake circuit or a combined parking brake and trailer control circuit. This embodiment of an MCPV allows a modular set of housings, for example with a standard first housing comprising the inlet port and the two outlet ports for the service brake circuits, and a standardized housing outlet for the second housing, which can be selected from a set of second housings for different applications, with a standardized mechanical interface. A loss of the second housing will not influence or impair the main service brake circuits of the pneumatic system of the commercial vehicle.

The MCPV may preferably comprise overflow valves. According to a preferred embodiment, the first housing comprises two (internal) direct output lines, each including an overflow valve and being connected to the pneumatic inlet port, respectively, wherein an internal output line for a parking brake circuit and/or a trailer control circuit, and/or further consumer circuits, is connected to both direct outlet lines via a double check valve, so that the higher pressure of the brake circuits is transferred to the internal output line. Such a pneumatic valve arrangement is often used for standard multi-circuit protection valves. This standard design can still be used in the inventive MCPV, where the additional blocking valve is preferably provided in the internal output line, in particular between the double check valve and a third overflow valve. In the event of separation or detachment of the second housing, the mechanically activated blocking valve closes, preventing any further pressure loss.

A pressure sensor for measuring the pressure in the first and/or second output line can be mounted on the first housing, preferably separately from the second housing. Thus, a modular system with the two housings and the sensor can provided.

The invention is hereinafter described in more detail with reference to the appended drawings, in which:
- Fig. 1: is a pneumatic diagram of a pneumatic device according to an embodiment of the invention;
- Fig. 2: shows a pneumatic device according to the pneumatic diagram of fig. 1;
- Fig. 3: shows a normal operating state of the pneumatic device;
- Fig. 4: shows a failure state with detached second housing.

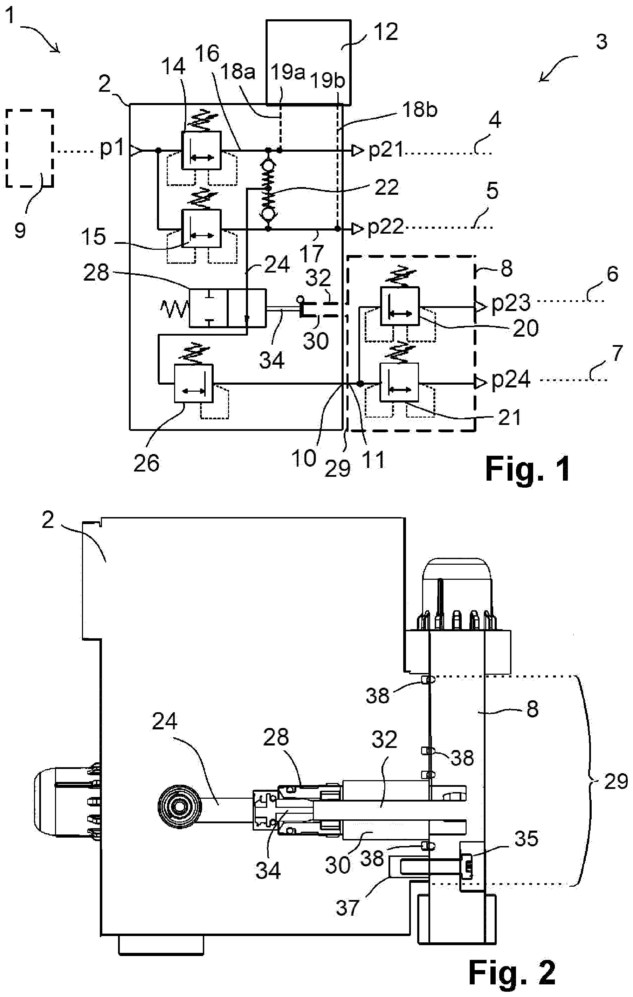

Fig. 1 shows a pneumatic device, which in this embodiment is realized by a multi-circuit protection valve MCPV 1 of a pneumatic system 3 of a commercial vehicle. The pneumatic system 3 further includes a compressor, an air dryer 9, and pneumatic consumer circuits 4, 5, 6, 7. The MCPV 1 comprises a first housing 2 with a pneumatic inlet port p1 to be connected to an outlet of the air dryer 9, a first pneumatic outlet port p21 for connecting a first service brake circuit 4 of the pneumatic system 3, and a second pneumatic outlet port p22 for connecting a second service brake circuit 5 of the pneumatic system 3. The first service brake circuit 4 is e.g. a front axle brake circuit 4, and the second service brake circuit 5 is e.g. a rear axle brake circuit 5. The MCPV 1 further comprises a second housing 8 mounted on the first housing 2, wherein the second housing 8 includes a first additional pneumatic outlet port p23 for connecting a pneumatic park brake circuit 6 or a combined park brake and trailer control circuit, and a second additional pneumatic outlet port p24 for further pneumatic consumer circuits of the pneumatic system 3. The first housing 2 further comprises a pneumatic housing outlet 10 to which a pneumatic housing inlet 11 of the second housing 8 is sealingly connected.

Both housings 2 and 8 together provide the functionality of the MCPV 1. A first overflow valve 14 and a second overflow valve 15 are connected in parallel to the pneumatic inlet port p1. A first direct output line 16 extends from the first overflow valve 14 to the first pneumatic outlet port p21, and, correspondingly, a second direct output line 17 extends from the second overflow valve 15 to the second pneumatic outlet port p22. Thus, the two service brake circuits 4 and 5 to be connected to the pneumatic outlet ports p21 and p22, respectively, are supplied in parallel with the pressurized air delivered to the inlet port p1.

The additional pneumatic outlet ports p23 and p24 are connected to the direct output lines 16 and 17 via a double check valve 22. An internal output line 24 is therefore connected to both direct output lines 16 and 17 via the double check valve 22 and thus receives the higher pressure of the direct output lines 16 and 17. The internal output line 24 is then connected to the pneumatic housing outlet 10 of the first housing 2, preferably via a third overflow valve 26; however, the provision of the third overflow valve 26 is not necessary. The pneumatic housing outlet 10 is sealingly connected to the pneumatic housing inlet 11 of the second housing 8, and the additional pneumatic output ports p23 and p24 are both connected to the pneumatic housing inlet 11 via additional overflow valves 20, 21, respectively. Thus, the first additional pneumatic output port p23 is connected to a first additional overflow valve 20, and the second additional pneumatic output port p23 p24 is connected to a second additional overflow valve 21. However, the additional overflow valves 20, 21 do not prevent pressure loss and leakage in the internal output line 24 in the event of failure and disengagement of the second housing 8.

Further devices and elements can be connected to the housings 2 and 8. In Fig. 1, a first sensor pressure line 18a is connected to the first direct output line 16 and leads to a first sensor outlet 19a of the first housing 2, and correspondingly a second sensor pressure line 18b is connected to the second direct output line 17 and leads to a second sensor outlet 19b of the first housing 2. A pressure sensor 12 is mounted on the first housing 2 at the sensor outlets 19a and 19b and measures the pressure in both direct output lines 16, 17.

According to the invention, a blocking valve 28 is provided in the internal output line 24 for blocking or shutting off the internal output line 24 depending on a connecting state of the two housings 2 and 8. The second housing 8 is attached to the first housing 2 at a mechanical interface 29 formed by the contact zones of the two housings 2 and 8. According to the embodiment shown, the first housing 2 has a recess 30 which receives a mechanical protrusion 32 of the second housing 8. The mechanical protrusion 32 may be an integral part of the second housing 8, or it can be formed by an additional mechanical means, such as a rod or pin, extending from the second housing 8. The blocking valve 28 is realized as a 2/2 check valve with mechanical control and spring preload. In fig. 1, a mechanical control 34 of the blocking valve 28 is visualized by a plunger 34 that is pushed by the mechanical protrusion 32 of the second housing 8. Thus, in the detached state or detached condition of the housings 2, 8 in which the second housing 8 is removed from the first housing 2, the mechanical protrusion 32 is removed and the blocking valve 28 switches back into its basic position, due to its spring preload, thereby pushing the plunger 34 into the recess 30, thereby blocking the internal output line 24.

Connecting the second housing 8 to the mechanical interface 29, thereby inserting the protrusion 32 into the recess 30 and pushing the plunger 34 against the spring preload of the blocking valve 28, switches the blocking valve 28 back to its actuated position, as is shown in Fig. 1.

The interface 29 can be realized by a protrusion - recess arrangement as roughly shown in Fig. 1, but other mechanical interfaces are also possible. The mechanical contact is relevant in that, in the assembled state, the mechanical contact results in an actuated position of the blocking valve 28 against its spring preload.

In the released or disassembled state, the blocking valve 28 blocks and prevents any air loss via the internal output line 24. Thus, any hardware failure, in particular a removal of the second housing 8 from the first housing 2, immediately results in a safety blocking of the internal output line 24, without the necessity for electric control signals. Thus, the hardware connection of the pneumatic device 1 is failure-proof.

In the embodiment of Fig. 2, the second housing 8 is mounted on the first housing 2 by at least one fixing screw 35. The mechanical interface 29 between the housings 2 and 8 contains
- the mechanical control contact by the protrusion 32 of the second housing 8, the plunger 34 and the recess 30 of the first housing 2,
- the fixing means or locking means, realized by one or more fixing screws 35 and threads 37 in the first housing 2, and
- sealings 38 between the housings 2 and 8.

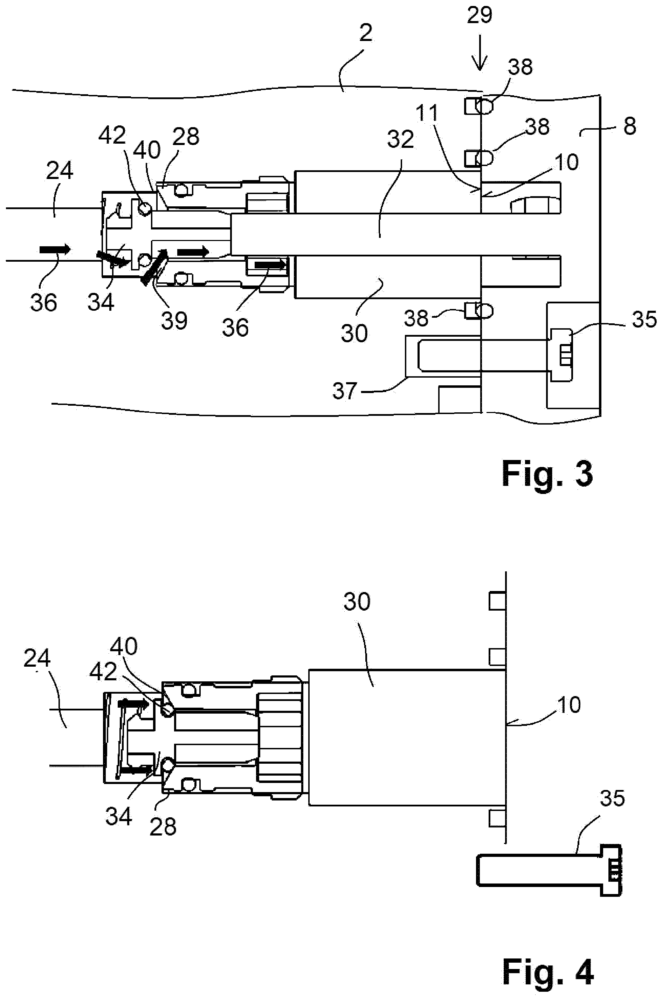

The protrusion 32 extends into the recess 30 and thereby pushes in the assembled state of Fig. 2 the plunger 34, which preferably serves as a valve part. Fig. 3 and 4 are enlarged views of this mechanical control connection. In Fig. 3, the blocking valve 28 is open and enables a pneumatic airflow 36 indicated by arrows, from the internal output line 24 through the open blocking valve 28 and through the recess 30 into the second housing 8. The valve 28 comprises a valve seat 40 provided in the recess 30 and an O-ring 42 received in the plunger 34. Therefore, an air passage 39 for the airflow 36 between the valve seat 40 and the O-ring 42 is open. However, the airflow 36 does not run through the recess 30, and other embodiments are possible.

In the failure state of Fig. 4, the screws 35 have loosened and the second housing 8 is detached from the first housing 2. The spring-loaded plunger 34 closes into its non-actuated basic position of Fig. 4, and the air passage 39 between the valve seat 40 and the O-ring 42 is closed.

When assembling the second housing 8 to the first housing 2 by sticking the protrusion 32 into the recess 30 and thereby pushing the plunger 34 to the left, the O-ring 42 is removed from the valve seat 40 and opens the air passage 39, thereby automatically enabling the airflow 36 between the housings 2 and 8.

### List of reference numerals (part of the description)

- 1: pneumatic device, in particular multi-circuit protection valve, MCPV
- 2: first housing
- 3: pneumatic system
- 4: first service brake circuit
- 5: second service brake circuit
- 6: pneumatic handbrake circuit
- 7: additional consumer circuit
- 8: second housing
- 9: air dryer, connected to the pneumatic inlet port p1

- 10: pneumatic housing outlet of the first housing 2
- 11: pneumatic housing inlet of the second housing 8
- 12: pressure sensor
- 14: first overflow valve
- 15: second overflow valve
- 16: first direct output line
- 17: second direct output line
- 18a: first sensor pressure line
- 18b: second sensor pressure line
- 19a: first sensor outlet of the first housing 2
- 19b: second sensor outlet of the first housing 2

- 20: additional overflow valve in the second housing 8
- 21: additional overflow valve in the second housing 8
- 22: double check valve
- 24: internal output line, to be secured
- 26: third overflow valve
- 28: blocking valve, security valve
- 29: mechanical interface between the housings 2, 8
- 30: recess in the first housing 2
- 32: mechanical part of the second housing 8, e.g. mechanical protrusion
- 34: mechanical control of the blocking valve 28, e.g. plunger
- 35: fixing screw
- 36: airflow
- 37: thread in the first housing 2
- 38: sealing
- 39: air passage
- 40: valve seat
- 42: O-ring

- p1: pneumatic inlet port
- p21: first pneumatic outlet port
- p22: second pneumatic outlet port
- p23: first additional pneumatic outlet port
- p24: second additional pneumatic outlet port

## Claims

1. Pneumatic device (1) for a pneumatic system of a commercial vehicle, said pneumatic device (1) comprising
a first housing (2) comprising a pneumatic inlet port (p1), at least one pneumatic housing outlet (10), and an internal output line (24) connected to said pneumatic housing outlet (10),
a second housing (8) assembled to said first housing (2), said second housing (8) comprising a pneumatic housing inlet (11) and at least one additional pneumatic outlet port (p23, p24),
wherein said pneumatic housing inlet (11) is sealingly connected to said pneumatic housing outlet (10) of said first housing (2),
**characterized in that**
said first housing (2) contains a blocking valve (28), said blocking valve (28) being provided in said internal output line (24),
wherein said blocking valve (28) is displaceable between a basic open position for allowing air flow in said internal output line (24) and a blocking position for blocking said internal output line (24),
wherein said blocking valve (28) is mechanically controlled depending on a position of said second housing (8) or a connection state of said second housing (8),
wherein in the case or event of a disassembling or lacking contact of said second housing (8) to said first housing (2), said blocking valve (28) is switched to its blocking position.

2. Pneumatic device (1) according to claim 1, wherein
said blocking valve (28) comprises a mechanical control (34),
said second housing (8) comprising a mechanical part (32),
said mechanical control (34) being actuated by said mechanical part (32) of said second housing (8),
wherein said mechanical control (34) and said mechanical part (32) contact each other in said basic open position.

3. Pneumatic device (1) according to claim 2, wherein
said housings (2, 8) contact each other in at least a mechanical interface (29),
said mechanical interface (29) comprising said pneumatic housing outlet (10), said pneumatic housing inlet (11), said mechanical control (34), and preferably locking means (35, 37) for locking said housings (2, 8).

4. Pneumatic device (1) according to claim 2 or 3, wherein
said blocking valve (28) is a 2/2 check valve biased into its blocking position by a pre-load and actuated into its open position against its preload by said mechanical part (32),
said mechanical part (32) pushing said mechanical control (34) of said blocking valve (28) into said actuated position against said pre-load.

5. Pneumatic device (1) according to one of claims 2 to 4, said first housing (2) comprising a recess (30),
wherein said mechanical part (32) of said second housing (8) protrudes into said recess (32) and pushes said mechanical control (34), in particular with a front face of said mechanical part (32).

6. Pneumatic device (1) according to one of the preceding claims, wherein said blocking valve (28) comprises a valve seat (40),
said mechanical control of said blocking valve (28) comprising a plunger (34), preferably extending into said recess (30),
wherein an air passage (39) is formed between said valve seat (40) and said plunger (34), said air passage (39) being closed in said blocking position of said blocking valve (28).

7. Multi-circuit protection valve (1) for a pneumatic system (3) of a commercial vehicle, said multi-circuit protection valve (1) being a pneumatic device according to one of the preceding claims,
wherein said first housing (2) comprises
- said pneumatic inlet port (p1),
- a first pneumatic outlet port (p21) to be connected to a first service brake circuit (4),
- a second pneumatic outlet port (p22) to be connected to a second service brake circuit (5), and
- said pneumatic housing outlet (10),
wherein said second housing (8) comprises
- said pneumatic housing inlet (11) and
- at least one additional pneumatic outlet port (p23, p24) to be connected to a further consumer circuit,
said at least one additional pneumatic outlet port (p23, 24) being connected to said pneumatic housing inlet (11), in particular via an additional overflow valve (20, 21).

8. Multi-circuit protection valve (1) according to claim 7, wherein
said first housing (2) comprises
a first direct output line (16) connecting said first pneumatic outlet port (p21) to said pneumatic inlet port (p1),
a second direct output line (17) connecting said second pneumatic outlet port (p22) to said pneumatic inlet port (p1),
said internal output line (24) being connected to both said first direct output line (16) and said second direct output line (17) via a double check valve (22), thereby connecting said internal output line (24) with the direct output line (16, 17) of higher pressure.

9. Multi-circuit protection valve (1) according to claim 8, wherein
said first direct output line (16) comprises a first overflow valve (14) between said pneumatic inlet port (p1) and said first pneumatic outlet port (p21), and
said second direct output line (17) comprises a second overflow valve (15) between said pneumatic inlet port (p1) and said second pneumatic outlet port (p22).

10. Multi-circuit protection valve (1) according to one of the claims 7 to 9, wherein
said second housing (8) comprises
a first additional pneumatic outlet port (p23) being connected to said pneumatic housing inlet (11) via a first additional overflow valve (20), and
a second additional pneumatic outlet port (p24),being connected to said pneumatic housing inlet (11) via a second additional overflow valve (21).

11. Pneumatic system (3) of a commercial vehicle, wherein said pneumatic system comprises
a multi-circuit protection valve (1) according to one of the claims 7 to 10,
an air dryer (9) connected to said pneumatic inlet port (p1) of said first housing (2), and
consumer circuits (4, 5, 6, 7) connected to said pneumatic outlet ports (p21, p22) and said at least one additional pneumatic outlet port (p23, p24) of said multi-circuit protection valve (1).

12. Pneumatic system (3) according to claim 11,
said consumer circuits (4, 5, 6, 7) comprising a first service brake circuit (4), a second service brake circuit (5), and
at least a handbrake circuit (6) and/or a trailer control circuit and/or a combined handbrake and trailer circuit, wherein
said first service brake circuit (4) is connected to said first pneumatic outlet port (p21),
said second service brake circuit (5) is connected to said second pneumatic outlet port (p22), and
said handbrake circuit (6) and/or trailer control circuit and/or combined handbrake and trailer circuit is connected to said at least one additional pneumatic outlet port (p23, p24).

## Patentansprüche

1. Pneumatische Vorrichtung (1) für ein pneumatisches System eines Nutzfahrzeugs, die pneumatische Vorrichtung (1) umfassend
ein erstes Gehäuse (2), umfassend eine pneumatische Einlassöffnung (p1), mindestens einen pneumatischen Gehäuseauslass (10) und eine interne Ausgangsleitung (24), die mit dem pneumatischen Gehäuseauslass (10) verbunden ist,
ein zweites Gehäuse (8), das an dem ersten Gehäuse (2) montiert ist, das zweite Gehäuse (8) umfassend einen pneumatischen Gehäuseeinlass (11) und mindestens eine zusätzliche pneumatische Auslassöffnung (p23, p24),
wobei der pneumatische Gehäuseeinlass (11) mit dem pneumatischen Gehäuseauslass (10) des ersten Gehäuses (2) abdichtend verbunden ist,
**dadurch gekennzeichnet, dass**
das erste Gehäuse (2) ein Sperrventil (28) enthält, wobei das Sperrventil (28) in der internen Ausgangsleitung (24) bereitgestellt ist,
wobei das Sperrventil (28) zwischen einer offenen Grundposition zum Zulassen eines Luftstroms in der internen Ausgangsleitung (24) und einer Sperrposition zum Sperren der internen Ausgangsleitung (24) verschiebbar ist,
wobei das Sperrventil (28) in Abhängigkeit von einer Position des zweiten Gehäuses (8) oder einem Verbindungszustand des zweiten Gehäuses (8) mechanisch gesteuert wird,
wobei im Falle einer Demontage oder eines fehlenden Kontakts des zweiten Gehäuses (8) mit dem ersten Gehäuse (2) das Sperrventil (28) in seine Sperrposition geschaltet wird.

2. Pneumatische Vorrichtung (1) nach Anspruch 1, wobei
das Sperrventil (28) eine mechanische Steuerung (34) umfasst,
das zweite Gehäuse (8) ein mechanisches Teil (32) umfasst,
die mechanische Steuerung (34) durch das mechanische Teil (32) des zweiten Gehäuses (8) betätigt wird,
wobei die mechanische Steuerung (34) und das mechanische Teil (32) einander in der offenen Grundposition berühren.

3. Pneumatische Vorrichtung (1) nach Anspruch 2, wobei
die Gehäuse (2, 8) einander in mindestens einer mechanischen Schnittstelle (29) berühren,
die mechanische Schnittstelle (29) den pneumatischen Gehäuseauslass (10), den pneumatischen Gehäuseeinlass (11), die mechanische Steuerung (34) und vorzugsweise Verriegelungsmittel (35, 37) zum Verriegeln der Gehäuse (2, 8) umfasst.

4. Pneumatische Vorrichtung (1) nach Anspruch 2 oder 3, wobei
das Sperrventil (28) ein 2/2-Wege-Rückschlagventil ist, das durch eine Vorbelastung in seine Sperrposition vorgespannt ist und durch das mechanische Teil (32) gegen seine Vorbelastung in seine offene Position betätigt wird,
das mechanische Teil (32) die mechanische Steuerung (34) des Sperrventils (28) gegen die Vorbelastung in die betätigte Position drückt.

5. Pneumatische Vorrichtung (1) nach einem der Ansprüche 2 bis 4, das erste Gehäuse (2) umfassend eine Aussparung (30),
wobei das mechanische Teil (32) des zweiten Gehäuses (8) in die Aussparung (32) hineinragt und die mechanische Steuerung (34) drückt, insbesondere mit einer Vorderfläche des mechanischen Teils (32).

6. Pneumatische Vorrichtung (1) nach einem der vorstehenden Ansprüche, wobei das Sperrventil (28) einen Ventilsitz (40) umfasst,
die mechanische Steuerung des Sperrventils (28) einen Stößel (34) umfasst, der sich vorzugsweise in die Aussparung (30) erstreckt,
wobei ein Luftdurchlass (39) zwischen dem Ventilsitz (40) und dem Stößel (34) ausgebildet ist, wobei der Luftdurchlass (39) in der Sperrposition des Sperrventils (28) geschlossen ist.

7. Mehrkreisschutzventil (1) für ein pneumatisches System (3) eines Nutzfahrzeugs, wobei das Mehrkreisschutzventil (1) eine pneumatische Vorrichtung nach einem der vorstehenden Ansprüche ist,
wobei das erste Gehäuse (2) umfasst
- die pneumatische Einlassöffnung (p1),
- eine erste pneumatische Auslassöffnung (p21), um mit einem ersten Betriebsbremskreis (4) verbunden zu werden,
- eine zweite pneumatische Auslassöffnung (p22), um mit einem zweiten Betriebsbremskreis (5) verbunden zu werden, und
- den pneumatischen Gehäuseauslass (10),
wobei das zweite Gehäuse (8) umfasst
- den pneumatischen Gehäuseeinlass (11) und
- mindestens eine zusätzliche pneumatische Auslassöffnung (p23, p24), um mit einem weiteren Verbraucherkreis verbunden zu werden,
wobei die mindestens eine zusätzliche pneumatische Auslassöffnung (p23, 24) mit dem pneumatischen Gehäuseeinlass (11) verbunden ist, insbesondere über ein zusätzliches Überströmventil (20, 21).

8. Mehrkreisschutzventil (1) nach Anspruch 7, wobei
das erste Gehäuse (2) umfasst
eine erste direkte Ausgangsleitung (16), die die erste pneumatische Auslassöffnung (p21) mit der pneumatischen Einlassöffnung (p1) verbindet,
eine zweite direkte Ausgangsleitung (17), die die zweite pneumatische Auslassöffnung (p22)
mit der pneumatischen Einlassöffnung (p1) verbindet,
wobei die interne Ausgangsleitung (24) über ein Doppelrückschlagventil (22) sowohl mit der ersten direkten Ausgangsleitung (16) als auch mit der zweiten direkten Ausgangsleitung (17) verbunden wird, wodurch die interne Ausgangsleitung (24) mit der direkten Ausgangsleitung (16, 17) höheren Drucks verbunden wird.

9. Mehrkreisschutzventil (1) nach Anspruch 8, wobei
die erste direkte Ausgangsleitung (16) ein erstes Überströmventil (14) zwischen der pneumatischen Einlassöffnung (p1) und der ersten pneumatischen Auslassöffnung (p21) umfasst, und
die zweite direkte Ausgangsleitung (17) ein zweites Überströmventil (15) zwischen der pneumatischen Einlassöffnung (p1) und der zweiten pneumatischen Auslassöffnung (p22) umfasst.

10. Mehrkreisschutzventil (1) nach einem der Ansprüche 7 bis 9, wobei das zweite Gehäuse (8) umfasst
eine erste zusätzliche pneumatische Auslassöffnung (p23), die über ein erstes zusätzliches Überströmventil (20) mit dem pneumatischen Gehäuseeinlass (11) verbunden ist, und
eine zweite zusätzliche pneumatische Auslassöffnung (p24), die über ein zweites zusätzliches Überströmventil (21) mit dem pneumatischen Gehäuseeinlass (11) verbunden ist.

11. Pneumatisches System (3) eines Nutzfahrzeugs, wobei das pneumatische System umfasst
ein Mehrkreisschutzventil (1) nach einem der Ansprüche 7 bis 10,
einen Lufttrockner (9), der mit der pneumatischen Einlassöffnung (p1) des ersten Gehäuses (2) verbunden ist, und
Verbraucherkreise (4, 5, 6, 7), die mit den pneumatischen Auslassöffnungen (p21, p22) und der mindestens einen zusätzlichen pneumatischen Auslassöffnung (p23, p24) des Mehrkreisschutzventils (1) verbunden sind.

12. Pneumatisches System (3) nach Anspruch 11,
die Verbraucherkreise (4, 5, 6, 7) umfassend einen ersten Betriebsbremskreis (4), einen zweiten Betriebsbremskreis (5) und
mindestens einen Handbremskreis (6) und/oder einen Anhängersteuerkreis und/oder einen kombinierten Handbrems- und Anhängerkreis, wobei
der erste Betriebsbremskreis (4) mit der ersten pneumatischen Auslassöffnung (p21) verbunden ist,
der zweite Betriebsbremskreis (5) mit der zweiten pneumatischen Auslassöffnung (p22) verbunden ist, und
der Handbremskreis (6) und/oder Anhängersteuerkreis und/oder kombinierte Handbrems- und Anhängerkreis mit der mindestens einen zusätzlichen pneumatischen Auslassöffnung (p23, p24) verbunden ist.

## Revendications

1. Dispositif pneumatique (1) pour un système pneumatique d'un véhicule utilitaire, ledit dispositif pneumatique (1) comprenant
un premier boîtier (2) comprenant un orifice d'entrée pneumatique (p1), au moins une sortie de boîtier pneumatique (10), et une conduite de sortie interne (24) raccordée à ladite sortie de boîtier pneumatique (10),
un second boîtier (8) assemblé audit premier boîtier (2), ledit second boîtier (8) comprenant une entrée de boîtier pneumatique (11) et au moins un orifice de sortie pneumatique supplémentaire (p23, p24),
dans lequel ladite entrée de boîtier pneumatique (11) est raccordée de manière étanche à ladite sortie de boîtier pneumatique (10) dudit premier boîtier (2),
**caractérisé en ce que**
ledit premier boîtier (2) contient une soupape de blocage (28), ladite soupape de blocage (28) étant située dans ladite conduite de sortie interne (24),
dans lequel ladite soupape de blocage (28) peut être déplacée entre une position ouverte de base pour permettre un écoulement d'air dans ladite conduite de sortie interne (24) et une position de blocage pour bloquer ladite conduite de sortie interne (24),
dans lequel ladite soupape de blocage (28) est commandée mécaniquement en fonction d'une position dudit second boîtier (8) ou d'un état de raccordement dudit second boîtier (8),
dans lequel, dans le cas ou l'éventualité d'un désassemblage ou d'un manque de contact dudit second boîtier (8) par rapport audit premier boîtier (2), ladite soupape de blocage (28) est commutée à sa position de blocage.

2. Dispositif pneumatique (1) selon la revendication 1, dans lequel
ladite soupape de blocage (28) comprend une commande mécanique (34),
ledit second boîtier (8) comprenant une pièce mécanique (32),
ladite commande mécanique (34) étant actionnée par ladite pièce mécanique (32) dudit second boîtier (8),
dans lequel ladite commande mécanique (34) et ladite pièce mécanique (32) sont en contact l'une avec l'autre dans ladite position ouverte de base.

3. Dispositif pneumatique (1) selon la revendication 2, dans lequel
lesdits boîtiers (2, 8) sont en contact l'un avec l'autre dans au moins une interface mécanique (29),
ladite interface mécanique (29) comprenant ladite sortie de boîtier pneumatique (10), ladite entrée de boîtier pneumatique (11), ladite commande mécanique (34), et de préférence des moyens de verrouillage (35, 37) pour verrouiller lesdits boîtiers (2, 8).

4. Dispositif pneumatique (1) selon la revendication 2 ou 3, dans lequel
ladite soupape de blocage (28) est une soupape anti-retour à 2/2 voies sollicitée dans sa position de blocage par une précharge et actionnée dans sa position ouverte à l'encontre de sa précharge par ladite pièce mécanique (32),
ladite pièce mécanique (32) poussant ladite commande mécanique (34) de ladite soupape de blocage (28) dans ladite position actionnée à l'encontre de ladite précharge.

5. Dispositif pneumatique (1) selon l'une des revendications 2 à 4, ledit premier boîtier (2) comprenant un évidement (30),
dans lequel ladite pièce mécanique (32) dudit second boîtier (8) fait saillie dans ledit évidement (32) et pousse ladite commande mécanique (34), en particulier par une face avant de ladite pièce mécanique (32).

6. Dispositif pneumatique (1) selon l'une des revendications précédentes, dans lequel ladite soupape de blocage (28) comprend un siège de soupape (40),
ladite commande mécanique de ladite soupape de blocage (28) comprenant un piston (34), s'étendant de préférence dans ledit évidement (30),
dans lequel un passage d'air (39) est formé entre ledit siège de soupape (40) et ledit piston (34), ledit passage d'air (39) étant fermé dans ladite position de blocage de ladite soupape de blocage (28).

7. Soupape de protection multicircuit (1) pour un système pneumatique (3) d'un véhicule utilitaire, ladite soupape de protection de multicircuit (1) étant **un** dispositif pneumatique selon l'une des revendications précédentes,
dans laquelle ledit premier boîtier (2) comprend
- ledit orifice d'entrée pneumatique (p1),
- un premier orifice de sortie pneumatique (p21) à raccorder à un premier circuit de frein de service (4),
- un second orifice de sortie pneumatique (p22) à raccorder à un second circuit de frein de service (5), et
- ladite sortie de boîtier pneumatique (10),
dans laquelle ledit second boîtier (8) comprend
- ladite entrée de boîtier pneumatique (11) et
- au moins un orifice de sortie pneumatique supplémentaire (p23, p24) à raccorder à un autre circuit consommateur,
ledit au moins un orifice de sortie pneumatique supplémentaire (p23, 24) étant raccordé à ladite entrée de boîtier pneumatique (11), notamment par l'intermédiaire d'une soupape de trop-plein supplémentaire (20, 21).

8. Soupape de protection multicircuit (1) selon la revendication 7, dans laquelle
ledit premier boîtier (2) comprend
une première conduite de sortie directe (16) raccordant ledit premier orifice de sortie pneumatique (p21) audit orifice d'entrée pneumatique (p1),
une seconde conduite de sortie directe (17) raccordant ledit second orifice de sortie pneumatique (p22)
audit orifice d'entrée pneumatique (p1),
ladite conduite de sortie interne (24) étant raccordée à la fois à ladite première conduite de sortie directe (16) et à ladite seconde conduite de sortie directe (17) par l'intermédiaire d'une soupape anti-retour double (22), raccordant de ce fait ladite conduite de sortie interne (24) à la conduite de sortie directe (16, 17) de pression plus élevée.

9. Soupape de protection multicircuit (1) selon la revendication 8, dans laquelle
ladite première conduite de sortie directe (16) comprend une première soupape de trop-plein (14) entre ledit orifice d'entrée pneumatique (p1) et ledit premier orifice de sortie pneumatique (p21), et
ladite seconde conduite de sortie directe (17) comprend une seconde soupape de trop-plein (15) entre ledit orifice d'entrée pneumatique (p1) et ledit second orifice de sortie pneumatique (p22).

10. Soupape de protection multicircuit (1) selon l'une des revendications 7 à 9, dans laquelle ledit second boîtier (8) comprend
un premier orifice de sortie pneumatique supplémentaire (p23) raccordé à ladite entrée de boîtier pneumatique (11) par l'intermédiaire d'une première soupape de trop-plein supplémentaire (20), et
un second orifice de sortie pneumatique supplémentaire (p24), raccordé à ladite entrée de boîtier pneumatique (11) par l'intermédiaire d'une seconde soupape de trop-plein supplémentaire (21).

11. Système pneumatique (22) d'un véhicule utilitaire, ledit système pneumatique comprenant
une soupape de protection multicircuit (1) selon l'une des revendications 7 à 10,
un sécheur d'air (9) raccordé audit orifice d'entrée pneumatique (p1) dudit premier boîtier (2), et
des circuits consommateurs (4, 5, 6, 7) raccordés auxdits orifices de sortie pneumatique (p21, p22) et audit au moins un orifice de sortie pneumatique supplémentaire (p23, p24) de ladite soupape de protection multicircuit (1).

12. Système pneumatique (3) selon la revendication 11,
lesdits circuits consommateurs (4, 5, 6, 7) comprenant un premier circuit de frein de service (4), un second circuit de frein de service (5), et
au moins un circuit de frein à main (6) et/ou un circuit de commande de remorque et/ou un circuit combiné de frein à main et de remorque, dans lequel
ledit premier circuit de frein de service (4) est raccordé audit premier orifice de sortie pneumatique (p21),
ledit second circuit de frein de service (5) est raccordé audit second orifice de sortie pneumatique (p22), et
lesdits circuit de frein à main (6) et/ou circuit de commande de remorque et/ou circuit combiné de frein à main et de remorque sont raccordés audit au moins un orifice de sortie pneumatique supplémentaire (p23, p24).
